(19)

**Europäisches Patentamt**
**European Patent Office**
**Office européen des brevets**

(11) **EP 4 604 469 A1**

(12) **EUROPEAN PATENT APPLICATION**

(43) Date of publication:
**20.08.2025 Bulletin 2025/34**

(51) International Patent Classification (IPC):
**H04L 27/02** (2006.01)    **H04L 27/26** (2006.01)

(21) Application number: **24305274.3**

(22) Date of filing: **16.02.2024**

(52) Cooperative Patent Classification (CPC):
**H04L 27/02; H04L 27/2602; H04L 27/2636;**
**H04L 27/2697**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Eurecom**
**06410 Biot (FR)**

(72) Inventors:
• **WAGNER, Sebastian**
  **06410 BIOT (FR)**
• **KNOPP, Raymond**
  **06410 BIOT (FR)**

(74) Representative: **Atout PI Laplace**
**Immeuble Up On**
**25 Boulevard Romain Rolland**
**CS 40072**
**75685 Paris Cedex 14 (FR)**

(54) **A USER DEVICE AND METHOD FOR TRANSMITTING AN ENCODED ON-OFF KEYING WAVEFORM**

(57)    There is provided a transmitter (10) for transmitting a Wake-Up Signal (WUS) message $m = 0,1, ..., 2^B - 1$ from an input bit vector $b$ comprising $B$ input bits $b_i$ through a communication channel, to one or more receiver devices (30), the transmitter comprising:
- a Multi-Carrier On-Off Keying (MC-OOK) modulator (1020) configured to apply a MC-OOK modulation to the input bit vector $a = [b_0, b_1, ..., b_{B-1}]$, which provides a MC-OOK modulated signal $s_m$ for the message $m$, the signal $s_m$ comprising $B$ elements $s_i$;
- a Discrete Fourier Transform (DFT) precoder (1022) configured to apply DFT-precoding to the signal $s_m$, which provides a resulting signal $S_m$;
- a single or multicarrier modulation unit (105) configured to apply single or multicarrier modulation to the resulting signal $S_m$ output by the DFT-precoder (1022),

the MC-OOK modulator (1020) being configured to map one of $Q$ available ON-sequences $a_q$ each comprising $K_B$ elements such as $a_q = [a_{q0}, a_{q1}, ..., a_{qKB}]$ to each element $s_i$ of the MC-OOK modulated signal $s_m$ whenever the corresponding input bit $b_i$ is equal to one, and a zero value otherwise,
the transmitter (10) being configured to transmit a wake-up message derived from the signal $x(t)$ determined by the single or multicarrier modulation unit (105) using one or more transmit antennas, the wake-up message transmission comprising an ON-sequence-based WUS transmission and an OOK waveform-based WUS transmission, wherein the transmitter (10) is configured to overlay multiple ON-sequences onto the OOK waveform.

_10_

$b$ → **Encoder** (101) → $c$ → **Waveform modulation unit** (102) → $S_m$ → **Resource Mapping unit** (104) → $X_m$ → **Single or multi-carrier Modulation Unit** (105) → $x_m(t)$

**FIGURE 5**

Description

TECHNICAL FIELD

The disclosure generally relates to digital communications and in particular to device and a method for generating waveforms and modulation schemes enabling low power receivers.

BACKGROUND

Many technical challenges have arisen to enable the transition of Mobile communication systems from the 4th generation (4G) mobile communication system to the future 5th generation (5G) mobile communication systems and beyond generations. In particular, 5G New Radio (5G NR) technology is being standardized to provide rich, reliable and hyper-connected communications.

A communications system forms a network comprising base stations providing radio coverage over a geographical area forming a cell. The cells serve User Equipments (UE) through the base stations. A User equipment can communicate using base stations. A user equipment transmit data over an air or radio interface to the base stations in uplink (UL) transmissions and radio base stations transmit data over an air or radio interface to the user equipments in downlink (DL) transmissions.

Existing mobile communication systems use multiple-access technologies to support communication with multiple users by sharing available system resources.

A UE and a base station may communicate through the communication network, via the radio channel using the RRC control mechanism. RRC enables the UE and the base station to exchange information. In 5G NR, the RRC defines three states: a RRC Idle state (RRC_IDLE state), a RRC connected state (RRC_CONNECTED state), and a RRC inactive state (RRC_INACTIVE state).

Wake-up signals (WUS) are used in mobile communication systems to enable saving power for the User Equipements UEs.

Wake-up signals (WUS) have been part of 3GPP since LTE-M/NB-IoT as well as NR Rel-17 with the main goal of power saving for the UEs. Low-Power (LP) Wake-up

Radio (WUR) is being studied in 3GPP Rel-18 (vivo, "New SID: Study on low-power Wake-up Signal and Receiver in NR," RP-213645, 2021).

A User Equipment has to monitor regularly for paging messages in case of incoming traffic or configuration updates.

The paging message is used to inform a UE in RRC_IDLE and in RRC_CONNECTED about a system information change. If the UE receives a paging message indicating a system information modification, the UE by default expects that the system information will change at the next modification period time.

A paging message is indicated via a Downlink Control Information (DCI) message carried in the Physical Downlink Control Channel or via a Reference Signal.

When a UE is in the idle mode, it disconnects itself from the base station. When a base station broadcasts a paging message within the user's tracking area consisting of several cells, the paging message comprises a set of temporary UE IDs if the base station pages several users at a time.

The monitoring of the paging messages at the UE requires the UE to wake up from deep sleep, do time-frequency synchronization and decode the paging DCI as well as the associated paging message. If the paging message contains the UE ID, then the UE moves into RRC_CONNECTED state via completing the RACH procedure. Otherwise it goes back to sleep. This procedure is quite power consuming and a lot of power is wasted if the UE is not paged.

A wake-up signal is designed to only wake up UEs that are actually going to be paged, or at least minimize the number of UEs that are falsely paged.

Designs of Wake-up signals WUS have been proposed for LTE-M and NB-loT networks. An exemplary WUS design for LTE-M consists of a length-132 Zadoff-Chu sequences, which spans 11 OFDM (Orthogonal Frequency Division Modulation) symbols and 4 PRB (Physical Resource Block). The sequence is then repeated on a second, adjacent PRB and the resulting 2 PRBs/11 symbols are repeated in time based on the configuration of the MPDCCH:
Such WUS is transmitted on a WUS resource of which up to 4 can be configured.

A UE has to monitor only one WUS resource. Each WUS resource can signal up to 8 groups. A UE must monitor two WUS, one common WUS and one group-specific WUS. The group-specific and common WUS are obtained through cyclic shifts of the Zadoff-Chu sequence and depends on the Cell ID, time offset to the associated paging occasion (PO) and the WUS resource ID.

The WUS in Rel-17, also referred to as Paging-Early Indication (PEI) is DCI-based and not sequence-based as in LTE-M. The main advantage of a DCI-based WUS is the increased payload capacity with the draw-back of increased receiver complexity and power-consumption for decoding. However, there is a trade-off between the WUS capacity and the decoding power-consumption since a higher capacity allows signaling of more UE groups which reduces the number of UEs that are falsely paged.

For example, there can be 4 paging frames within one DRX cycle:

The PEI is transmitted before the associated paging frames and consists of S consecutive PDCCH monitoring occasions (MO). The PDCCH for PEI carries DCI Format 2_7 which contains the PI Field. One PEI can indicate up to 8 groups for up to 8 paging occasions via a bitmap allowing for independent signaling of the groups.

A Low-Power (LP)-WUS design has been proposed in IEEE 802.1 BSa. In contrast to the WUS design for LTE-M and NR Rel-17, the Low-Power (LP) WUS, also called Wake-Up Radio (WUR), is designed to enable very low-power receivers that operate independently from the Primary Communication Radio (PCR). The Wake-Up Radio (WUR) does not receive or transmit any data but is used to transmit management information only from the base-station (BS) to the UE, such as wake-up notifications.

Hence, there is no ACK/NACK feedback nor a WUS transmitter.

According to the conventional WUR PPDU Format, after the legacy training signals, the WUR transmission consists of a WUS-Sync sequence and a WUR-Data part. The WUR-Sync sequence is used to synchronize the WUR frame and to signal the data rate of the subsequent WUR-Data transmission. Since the sequence is known to the UE, it can also be used for channel estimation purposes. The WUR-Data part carries the payload from the MAC with a data rate of either 62.5 kb/s, low data rate (LDR), or 250 kb/s, high data rate (HDR).

The MAC payload consists of a MAC Header, an optional Frame Body and Frame Check Sequence (FCS). The MAC header comprises a Frame Ctrl part, an ID part and a TDC part. The Frame Ctrl part of the MAC Header signal the type of frame, if a frame body is present and if so the Frame Ctrl part signals the length of the frame body. The ID part of the MAC Header can indicate either the WUR ID of a specific device, a WUR group ID if the frame is intended for a group of devices or the transmitter ID if the frame is a broadcast frame. In case of a group-cast transmission, individual WUR IDs of devices in the group can be signaled in the frame body, which enables the WUR frame to target specific devise within the group.

On the physical layer, WUR signals are modulated with multi-carrier (MC) On-Off Keying (OOK). MC-OOK has been standardized in IEEE 802.11 ba. The payload of the WUR-Data part is encoded with a Manchester Code prior to modulation according to an encoding and modulation procedure.

MC-OOK design for LP-WUS enables very low-power receivers as well as its simple integration into the OFDM transmit chain.

An OOK waveform can be received through energy detection (ED) by a wake-up receiver that is capable of energy detection, while the information carried by different sequences assigned to the OOK waveform can be only decoded by a wake-up receiver capable of carrying out correlations in time or frequency-domain.

However, existing transmitters do not enable transmission of OOK waveforms adapted for efficient decoding with energy detection and/or correlation detection.

There is accordingly a need for devices, systems and methods capable of generating improved OOK waveforms.

## Summary

To address these and other problems, there is provided a transmitter configured to transmit a Wake-Up Signal (WUS) message $m = 0, 1, ..., 2^B - 1$ from an input bit vector $b$ comprising $B$ input bits $b_i$ through a communication channel using single or multi-carrier modulation, to one or more receiver devices, the transmitter comprising a set of transmit antennas. The transmitter comprises:

- a Multi-Carrier On-Off Keying (MC-OOK) modulator configured to apply a MC-OOK modulation to the input bit vector $b$ = $[b_0, b_1, ..., b_{B-1}]$, which provides a MC-OOK modulated signal $s_m$ for the message m, the signal $s_m$ comprising $B$ elements $s_i$;
- a Discrete Fourier Transform (DFT) precoder configured to apply DFT-precoding to the signal $s_m$, which provides a resulting signal $S_m$;
- a single or multicarrier modulation unit configured to apply single or multicarrier modulation to the resulting signal $S_m$ output by the DFT-precoder.

In some aspects, the MC-OOK modulator is configured to map one of Q available ON-sequences $a_q$ each comprising $K_B$ elements such as $a_q = [a_{q0}, a_{q1}, ..., a_{qK_B}]$ to each element $s_i$ of the MC-OOK modulated signal $s_m$ whenever the corresponding input bit $b_i$ is equal to one, and a zero value otherwise.

The transmitter is configured to transmit a wake-up message derived from the signal x(t) determined by the single or multicarrier modulation unit using one or more transmit antennas, the wake-up message transmission comprising an ON-sequence-based WUS transmission and an OOK waveform-based WUS transmission, the transmitter being configured to overlay multiple ON-sequences onto the OOK waveform.

In some aspects, the one or more receiver devices are grouped in groups of receiver devices, each group of receiver devices being associated with a group identifier, the wake-up message being sent to one or more groups of user devices, wherein the *B* input bits correspond to a number of groups of receiver devices, and the OOK waveform may be used to encode the identifier (ID) of the at least some groups of user devices and/or one or more ON-sequences may be used to encode the identifier (ID) of the remaining groups among the one or more groups.

In some embodiments, the groups may be paired by group pairs, according to a group pair mapping, a group pair comprising a first group and a second group, and the OOK waveform may be used to encode the identifier (ID) of the first group of a group pair, whereas the ON-sequences may be used to encode the identifier (ID) of the second group of the same group pair.

The OOK waveform may be used to encode bits $b = [b_0, b_1, ..., b_{B-1}]$ whereas the ON sequences may be used to encode $\overline{b} = [b_{\lfloor B/2 \rfloor} b_{\lfloor B/2 \rfloor+1} ... b_B b_0, b_1, ..., b_{\lfloor B/2 \rfloor-1}]$.

The pair mapping may be a circular shift mapping.

In some aspects, the groups may be organized in non-overlapping sets of groups, comprising at least two sets of groups, for example using a group mapping, and in a given set of groups, the group identifiers may be encoded jointly.

In some embodiments, in a given set of group, one or more groups may have their group identifiers encoded using the OOK waveform, while the identifiers of the remaining groups of the set may be encoded using the ON-sequences.

The group sets may comprise two sets, including a first set of groups comprising groups having even group identifiers and a second set of groups comprising groups having odd group identifiers.

In some aspects, the OOK waveform and the one or more ON-sequences may be used to encode different and independent payloads.

In some aspects, the transmission sent by the transmitter may be terminated early, after the ON-sequence-based WUS has been sent even if OOK-based WUS is sent incompletely.

In some aspects, the waveform sent by the transmitter may comprise a dedicated bit indicating a wake-up receiver type among an energy detection wake-up receiver and a correlation wake-up receiver.

In some embodiments, the encoder may use at least one generator code to code the input bits, the generator code being a Manchester Code or an extended Manchester Code.

There is further provided a method for transmitting a Wake-Up Signal (WUS) message $m = 0, 1, ..., 2^B - 1$ from an input bit vector *b* comprising *B* input bits $b_i$ through a communication channel using single or multi-carrier modulation, to one or more receiver devices, wherein the method comprises:

- applying a MC-OOK modulation to the input bit vector $b = [b_0, b_1, ..., b_{B-1}]$, which provides a MC-OOK modulated signal $s_m$ for the message *m*, the signal $s_m$ comprising *B* elements $s_i$;
- applying DFT-precoding to the signal $s_m$, which provides a resulting signal $S_m$;
- applying single or multicarrier modulation to the resulting signal $S_m$ output by the DFT-precoder,

  wherein the MC-OOK modulation step comprises mapping one of *Q* available ON-sequences $a_q$ each comprising $K_B$ elements such as $a_q = [a_{q0}, a_{q1}, ..., a_{qK_B}]$ to each element $s_i$ of the MC-OOK modulated signal $s_m$ whenever the corresponding input bit $b_i$ is equal to one, and a zero value otherwise,

  the transmission method comprising transmitting a wake-up message derived from the signal $x(t)$ determined in the single or multicarrier modulation step, using one or more transmit antennas, the wake-up message transmission comprising an ON-sequence-based WUS transmission and an OOK waveform-based WUS transmission, wherein the method is configured to overlay multiple ON-sequences onto the OOK waveform.

**Brief description of the drawings**

The accompanying drawings, which are incorporated in and constitute a part of this specification, illustrate various embodiments of the disclosure together with the general description of the disclosure given above, and the detailed description of the embodiments given below.

- Figure 1 represents an exemplary communication system in which embodiments of the present disclosure may be implemented.

- Figure 2 is a block diagram representing the transmission of a message comprising a plurality of information symbols from a transmitter to a receiver.

- Figure 3 depicts a functional block diagram of a user device that may be employed within the wireless communication system.

- Figure 4 depicts the time-domain structure of a conventional OFDM transmission sent by a transmitter.

- Figure 5 is a block diagram representing the structure of the transmitter, according to some embodiments.

- Figure 6 represents a table corresponding to an exemplary encoding performed by the encoder using a rate $R = 1/2$ Manchester code.

- Figure 7 represents a table corresponding to another exemplary encoding performed by the encoder using a rate $R = 3/8$ Manchester code.

- Figure 8 is a block diagram representing the Waveform Modulation unit according to some embodiments.

- Figure 9 is a block diagram representing the DFT-precoder according to an exemplary embodiment.

- Figure 10 is a diagram representing an example of an OOK-4 WUS generated by the transmitter using Manchester coding, considering 8 groups of user devices.

- Figure 11 is a diagram representing an exemplary sequence encoding scheme, according to such embodiment, using two ON sequences.

- Figure 12 represents an exemplary group mapping using circular shifts.

- Figure 13 illustrates an example of a sequence encoding scheme.

- Figure 14A depicts an example of a sequence encoding scheme using extended Manchester coding.

- Figure 14B shows an example of a sequence encoding scheme generated with extended Manchester coding**Erreur ! Source du renvoi introuvable..**

- Figure 15 is a flowchart representing the joint encoding method according to some embodiments.

- Figure 16 depicts an example of independent OOK modulation and sequence encoding using a first payload encoded via the OOK encoding and a second payload encoded via the sequence encoding.
  . Figure 17 represents an example of an independent OOK encoding and sequence encoding.

- Figure 18 represents an example of a proposed sequence encoding scheme using a dedicated bit to signal a WUR-type bit.

- Figure 19 shows the performance of the exemplary transmission schemes illustrated in figures 11 and 12.

- Figure 20 is a flowchart representing the transmission method according to some embodiments.

**Detailed description**

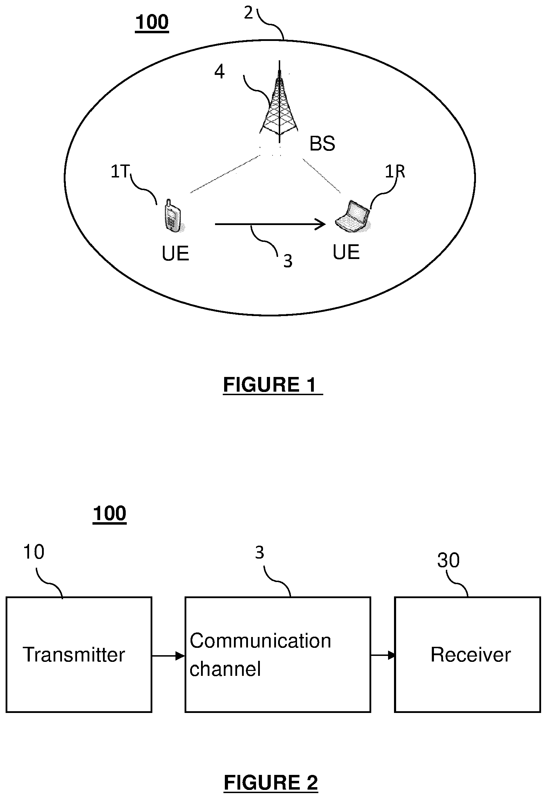

Referring to figure 1, there is shown an exemplary communication system 100 in which embodiments of the present disclosure may be implemented.

The communication system 100 comprises one or more wireless user devices 1 (also referred to as User Equipments UEs, according to 3GPP standard) that include user terminals, and one or more base stations BS 4 (also referred to as a Node, designated by a derivative of the term 'NodeB' such as gNodeB node or gNB in 5G NR). A user device 1 may act as a transmitter device (or 'transmitter') configured to send data to one or more other user devices 1 acting as receiver devices (or 'receivers') through a mobile communication network 2. The base station BS 4 is associated with a cell defining a geographical cell area. The cell associated with the base station BS is served by the base station.

Numeral reference 1 will be generally used to refer to a user device that can act as a transmitter and/or receiver.

The communication system 100 may be for example a wireless communication system such as a new radio (NR), a 5G and beyond 5G network.

Although reference will be mainly made to 3GPP network in the following description, the skilled person will readily understand that the embodiments of the disclosure also apply to similar or equivalent networks, such as a successor of the 3GPP network. In the following description, enclosed drawings and appended claims, the use of the term 3GPP and terms related to the 3GPP network should be interpreted accordingly. Similarly, although reference will be made to 5G NR, for illustration purpose, such reference should be interpreted as encompassing any future xG network (6G and beyond) having similar functional components.

A user device 1 may be fixed or mobile and/or may be remotely monitored and/or controlled. A user device 1 may be equipped with power sources that provide power to the different components ensuring the UE operation.

In an application of the disclosure to wireless communication systems such as ad-hoc wireless networks used in local area communications, wireless sensor networks and radio communication systems (e.g. LTE, LTE-advanced, 5G and beyond), the user device 1 may be any type of fixed or mobile user device configured to operate in a wireless environment.

A user equipment UE may be, without limitation, a mobile phone, a computer, a laptop, a tablet, a drone, an IoT device, etc.

The communication network 2 may be any wireless network enabling IoT. Exemplary wireless networks comprise low-power short range networks and LPWANs.

Further, the communication network 2 may accommodate several pairs of user equipments UE. In such embodiments, multiple access techniques and/or network coding techniques may be used in combination with error correction codes and modulation. Exemplary multiple access techniques comprise without limitation Time Division Multiple Access (TDMA), Frequency Division Multiple Access (FDMA), Code Division Multiple Access (CDMA), and Space Division Multiple Access (SDMA), and Non-Orthogonal Multiple Access (NOMA) technology.

A user device 1 may be equipped with a plurality of transmit and/or receive antennas, and may implement space-time coding and/or space-time decoding techniques which may be used in combination with coded modulations for encoding data both in the time and space dimensions.

A user device 1 may be implemented or used as a transmitter device 1T (also called 'transmitter'), in which case it is configured to generate and transmit a data packet to one or more wireless devices 1R. Alternatively, the user device 1 may be implemented or used as a receiving device (also called 'receiver') 1R, in which case it is configured to receive and process a data packet.

A user device 1 implemented or used as a transmitter device (or 'transmitter) will be designated hereinafter by the reference 10. A user device 1 implemented or used as a receiving device (or receiver) will be designated hereinafter by the reference 30.

Figure 2 is a block diagram representing the transmission of a message comprising a plurality of information symbols from a transmitter 10 to a receiver 30, through a communication channel 3, in the communication system 100.

The receiver 30 is configured to receive the signal transmitted by the transmitter 10 in the communication system 100 and decode the received signal to recover the original data.

The communication channel 3 may be any communication channel adapted to transmit information symbols from the transmitter 10 to another user device acting as a receiver 30 in the communication system 100, depending on the type of the communication system, such as for example a wireless medium. The communication channel 3 may be any wireless propagation medium adapted to such devices.

The communication channel 3 may be a multipath channel using single-carrier or multi-carrier modulation formats such as OFDM (Orthogonal Frequency Division Multiplexing) for mitigating frequency-selectivity, interference and delays.

The communication channel 3 may be a noisy channel. For example, the noise may result from the thermal noise of the system components and/or the intercepted interfering radiation by antennas. The total noise may be modeled by an additive white Gaussian noise (AWGN).

The communication channel 3 may for example represent any wireless network enabling IoT. Exemplary wireless networks 2 comprise low-power short range networks and LPWANs. Exemplary LPWAN technologies comprise LTE-NB1 and NB-IoT.

The transmitter 10 may be configured to transmit a WUS (Wake Up Signal) message to a receiver 30 in the communication system 100 that is in a power save mode. In response to the receipt of the WUS, the receiver 30 may use the WUS to determine when to transition to an awake state or to an idle state.

For example, the receiving user device 1 may enter in an idle state, in an awake state for a certain period of time or determine when to be in an awake state based on the received WUS message.

As used herein, the term "wake-up" refers to the operation of a user device to enter an operational state (awake state) from an idle or inactive state in order to perform its operational functions (sending and receiving data).

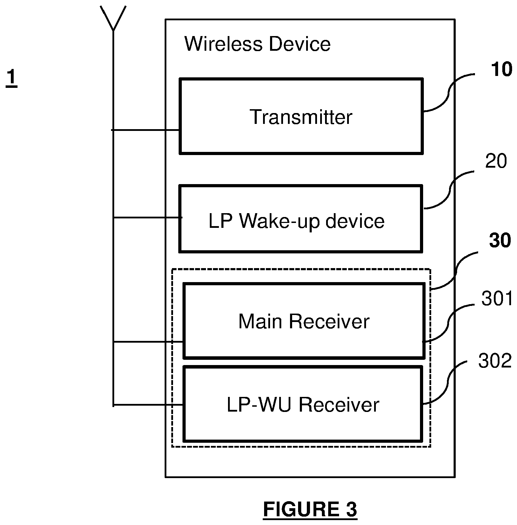

Figure 3 depicts a functional block diagram of a user device 1 that may be employed within the wireless communication system 100 of Figure 1.

The user device 1 may comprise a transmitter 10 when operating in transmission mode and a receiver 30 when operating in receiving mode.

The receiver 30 may comprise a main receiver 301 configured to receive the signal transmitted by a transmitter 10 in the communication system (such as a base station BS or another user equipment UE) and decode the received signal to recover the original data.

The user device 1 may further comprise a Low Power (LP) wake-up (WU) device 20 (referred to hereinafter as a "LP WU device") configured to turn on the user device 1. The receiver 30 may also comprise an auxiliary receiver 302, also referred to as a Low Power Wake-Up receiver or "LP WU receiver", configured to consume less power than the main receiver 301 during operation to reduce the overall power consumption of the user device 1.

The LP WU receiver 302 may be configured to receive signals using modulation/demodulation techniques such as on-off keying.

If the user device 1 has nothing to receive or transmit, the user device 1 may go to deep sleep, shut off the main receiver 301 and turn on the LP-WU receiver 302. When the LP-WU receiver 302 detects a WUS, the user device 1 is configured to turn on the main receiver 301, while the LP-WU receiver 302 may be turned off or kept ON if the WUS is also supported in RRC_CONNECTED mode.

To enable transmission of a WUS from a transmitting user device 1T to a receiving user device 1R, the transmitter 10 of the transmitting user device 1T is configured to apply processing steps to generate the WUS which include modulating WUR with multi-carrier (MC) On-Off Keying (OOK).

Although reference will be made mainly to a Wake-up message type used to wake up one or multiple other wireless devices 1 in the communication system 100 for illustrating purpose, it should be noted that the invention is not limited to a to wake up message and may carry other types of WUS messages or a combination thereof such a WUS Control Message used to signal a change in Wake Up Signal control configuration, or a WUS Small Data Message transmitting a small payload.

The transmitter 10 is configured to transmit a Wake-Up Signal (WUS) message m such that $m = 0, 1, ..., 2^B - 1$ from input bits $b = [b_0, b_1, ..., b_{B-1}]$ comprising $B$ bits $b_i$ through a communication channel 3 using single or multi-carrier modulation (such as OFDM modulation).

In some aspects, the transmitter 10 may use multi-carrier (MC) On-Off Keying (OOK) modulation and single or multi-carrier modulation, such as OFDM modulation (OFDM is the acronym for 'Orthogonal Frequency-Division Multiplexing') for encoding and modulating the WUS binary message $m$ to be transmitted to the receiver 30 on multiple carrier frequencies, through the communication channel 3.

The message m is defined by $m = 0, 1, ..., 2^B - 1$ from input bits $b = [b_0, b_1, ..., b_{B-1}]$ comprising $B$ bits $b_i$.

The following description of some embodiments of the invention will be made mainly with reference to single or multi-carrier modulation of OFDM type for illustration purpose only although the invention applies to other equivalent single-carrier or multi-carrier modulation.

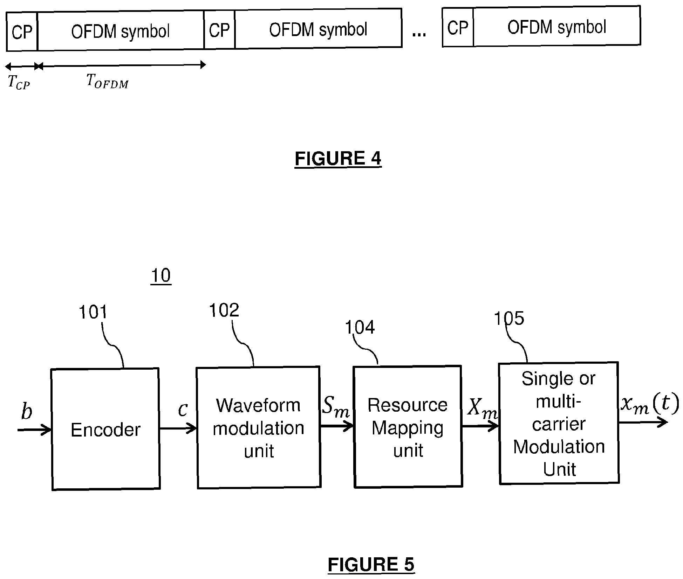

Figure 4 depicts the time-domain structure of a conventional OFDM transmission sent by a transmitter. The OFDM symbol has a duration of $T_{OFDM}$ which is given by the sub-carrier spacing (SCS) $\Delta f$ as $T_{OFDM} = 1/\Delta f$ and is preceded by the Cyclic Prefix (CP) of duration $T_{CP}$. The $T_{CP}$ duration may not be the same for every OFDM symbol and depends on the symbol number within a slot.

It is considered that $K$ out of $N$ sub-carriers are allocated for OOK transmission. In the simple case of multi-carrier OOK, all $K$ sub-carriers are either used for transmission (if logical 1 is transmitted) or not used (if 0 is transmitted). When '1' is transmitted, the receiver will receive a signal (and hence power) over the full symbol duration $T_{CP} + T_{OFDM}$. However, it will receive no power if '0' is transmitted.

The transmitter 10 according to the embodiments of the disclosure is configured to overlay different sequences onto an OOK waveform, enabling efficient transmission of OOK waveforms for decoding with energy detection and correlation detection.

Figure 5 is a block diagram representing the structure of the transmitter 10, according to some embodiments.

In the following description of some embodiments, it is considered that a narrowband Multi-Carrier On-Off Keying (MC-OOK) transmission with $K$ sub-carriers is used, where the received vector of a modulation symbol $l$ on receive antenna $p$ of the receiver 30 is given by:

$$r_{l,p} = H_{l,p} F s_{l,m} + n_{l,p} \quad (1)$$

In equation (1), $s_{l,m}$ designates the transmit signal for the message $m$, $H_{l,p}$ is defined by $H_{l,p} = \text{diag}(h_{l,p,1}, h_{l,p,2}, ..., h_{l,p,K})$, $h_{l,p,k}$ represents the complex channel coefficient on sub-carrier $k$, $k = 1, 2, ..., K$ and $F$ is the DFT (Discrete Fourier Transform) matrix of size $K$. The noise vector $n_{l,p} = [n_{l,p,1}, n_{l,p,2}, ..., n_{l,p,K}]$ is assumed to be independent and identically distributed (i.i.d.) complex Gaussian with zero mean and variance $\sigma^2$, i.e. $n_k \sim NC(0, \sigma^2)$.

The transmitter 10 is configured to receive the $b = [b_0, b_1, ..., b_{B-1}]$ input bits corresponding to the message $m = 0, 1, ..., 2^B - 1$.

The transmitter 10 comprises an encoder 101 configured to encode a message $m = 0, 1, ..., 2^B - 1$ comprising the $B$ information bits $b = [b_0, b_1, ..., b_{B-1}]$, which provides $C$ coded bits defined as $c = [c_0, c_1, ..., c_{C-1}]$.

The transmitter 10 comprises a waveform modulation unit 102 configured to modulate the $C$ coded bits delivered by the encoder 101 onto $L$ consecutive modulation symbols (such as OFDM symbols), each carrying $M$ bits. $M$ therefore corresponds to the number of coded bits or OOK symbols per OFDM symbol.

The waveform modulation unit 102 is configured to provide a signal in frequency-domain $S_m$ of message $m = 0,1, ..., 2^B - 1$ from the modulated bits.

The transmitter 10 also comprises a Resource Mapping unit 104 configured to map the signal in frequency-domain $S_m$ of message $m = 0,1, ..., 2^B - 1$ to the overall resources $X_m$ of $N$ sub-carriers.

The transmitter 10 further comprises a single or multicarrier modulation unit 105 configured to map the resulting signal $S_m$ to the overall system resources by applying single or multicarrier modulation to the resulting signal $S_m$ over the entire system bandwidth, which provides a time-domain base-band signal $x_m(t)$.

The single or multi-carrier modulation unit 105 is configured to convert the signal $S_m$ from the time domain to the frequency domain using a modulation technique and spread the signals thus obtained over the transmission antennas of the transmitter 4.

In embodiments using OFDM modulation, the single or multicarrier modulation unit 105 uses an OFDM modulation technique to convert the signal $S_m$ from the time domain to the frequency domain.

Prior to signal modulation, the encoder 101 is configured to encode the $B$ information bits $b$ to the $C$ coded bits $c$. The encoder 101 may use at least one generator code to encode the $b$ bits based on a coding scheme for ON-OFF Keying (OOK) waveforms.

In one embodiment, the generator code used by the encoder 101 may be a Manchester Code, the encoder 101 applying Manchester coding to encode the $b$ bits. The Manchester code has a given rate $R$.

For example, a rate $R = 1/2$ Manchester code may be used. The encoder 101 may then apply the rate $R = 1/2$ Manchester code to map the input bit b to the output bits c as follows:

$$c' = \begin{cases} [0, 1], b' = 0 \\ [1, 0], \ b' = 1 \end{cases} \quad (2)$$

In equation (2), $c'$ denotes a codeword of length $C' \leq C$ encoding a bit sequence $b'$ of length $B' \leq B$. $B'$ is the number of input bits $b'$ that are jointly encoded into codeword $c'$. Hence, $B'$ bits are taken from the input bits $b$ s.t.

$b = [b'_0, b'_1, ..., b'_{[B/B']}]$ and the resulting coded bits are $c = [c'_0, c'_1, ..., c'_{[C/C']}]$.

Such mapping avoids long sequences of zeros where nothing is transmitted while enabling encoding of the information in the transition from 0 to 1 or 1 to 0. Therefore, instead of comparing to a threshold, the receiver device 30 receiving the message from the transmitter device 10 can compare between the 0- and the 1-part of the transmission and thus avoid complicated threshold determination.

In some embodiments, the $R = 1/2$ Manchester code can be extended to increase performance of the DFT-precoded MC-OOK waveform generation by the transmitter 10.

Considering $B'$ input bits defined by the vector $b' = b_0, b_1, ..., b_{B'-1}$, the encoder 101 may apply an extended Manchester code to output corresponding coded bits $c' = c_0, c_1, ..., c_{N-1}$ given by:

$$\bar{c} = 2^m \quad (3)$$

In equation (3), $m = 0,1, ..., 2^{B'} - 1$ is the message and $\bar{c}$ is the decimal representations of the codeword $c'$.

The rate of the Manchester code is given by $R = \frac{B'}{2^{B'}}$. Increasing $B'$ will decrease the code rate. The skilled person will readily understand that the rate of the Manchester code is not limited to rate $R = 1/2$ or $R = 3/8$ and can have any suitable value.

The advantage of using $B' = 2$ compared to $B' = 1$, is that double the power can be used for $B' = 2$ per codeword because the power has to be divided among 2 codewords in case of $B' = 1$. Moreover, decoding remains simple and does not involve complex threshold detection. Even if $B' = 2$ may result in a higher peak-to-average power ratio (PAPR), 3dB in the previous example, with the use of a DFT-precoder in the transmission chain, the PAPR increase is minor due to the DFT-precoding.

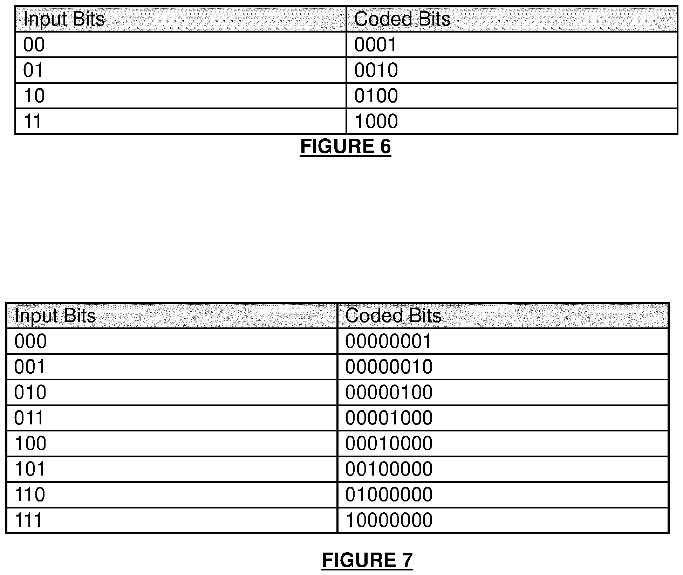

Figure 6 represents a table corresponding to an exemplary encoding performed by the encoder 101 for $B' = 2$ input bits and $N = 4$ coded bits using a rate $R = 1/2$ Manchester code and figure 7 represents a table corresponding to an exemplary encoding performed by the encoder 101 for $B' = 3$ input bits, and $N = 8$ coded bits using a rate $R = 3/8$ Manchester code.

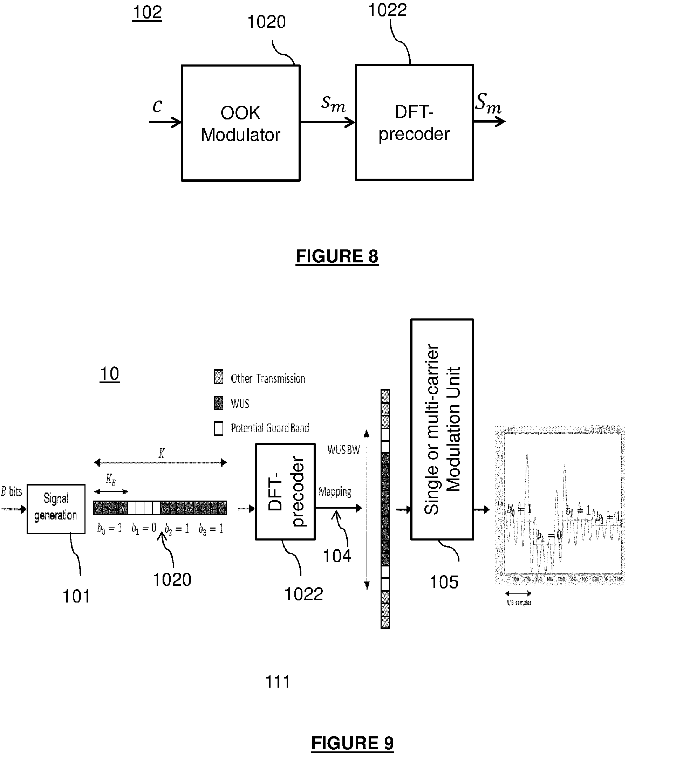

Figure 8 is a block diagram representing the Waveform Modulation unit 102 according to some embodiments. The Waveform Modulation unit 102 may comprise a OOK modulator 1020 and a DFT-precoder 1022.

Two modulation schemes may be used by the transmitter 10:

> 1. a first modulation scheme corresponding to a MC-OOK modulation scheme with a single OOK symbol per OFDM symbol, and

> 2. a second modulation scheme corresponding to a DFT-precoded MC-OOK modulation scheme with one or more OOK symbols per OFDM symbol.

For MC-OOK, the encoded bits c are directly mapped onto a sequence $\boldsymbol{S}_m$ of length $K$.

The OOK-modulator 1020 is configured to apply a MC-OOK modulation to the $C$ coded bits and modulate $M$ bits per OFDM symbol $\boldsymbol{c} = [c_0, c_1, ..., c_{C-1}]$ corresponding to (coded) message $m = 0,1, ..., 2^C - 1$ delivered by the encoder 101, which provides a OOK modulated producing signal $s_m$ per modulation symbol $l$ (such as OFDM symbols). $\boldsymbol{s}_m$ therefore denotes the OOK modulated signal in time-domain for message $m = 0,1, ..., 2^B - 1$.

$c$ may comprise one or more codewords $\boldsymbol{c'}$.

The MC-OOK modulated signal $\boldsymbol{s}_m$ for a message $m = 0,1, ..., 2^B - 1$ is defined by:

$$\boldsymbol{s}_m = [\boldsymbol{s}_0, \boldsymbol{s}_1, ..., \boldsymbol{s}_{B-1}] \quad (4)$$

In equation (4), $B$ is the number of (coded) bits transmitted per OFDM symbol $l$ and $\boldsymbol{s}_i = [s_{i0}, s_{i1}, ..., s_{iK_B-1}]$ with

$$K_B = \lfloor K/B \rfloor$$, $K_B$ representing the number of samples for sequence $\boldsymbol{s}_i$, $i = 0,1, ...,B - 1$.

The signal $\boldsymbol{s}_m$ generated by the OOK-modulator 1020 forms a Wake-Up signal WUS.

In some aspects, the OOK-modulator 1020 is configured to map one of Q available ON-sequences $a_q$ each comprising $K_B$ elements such as $a_q = [a_{q0}, a_{q1}, ..., a_{qK_B}]$ to each element $s_i$ of the MC-OOK modulated signal $s_m$ whenever the corresponding input bit $b_i$ is equal to one, and a zero value otherwise.

The ON-sequence is of length $K_B$ but there can be $Q$ ON-sequences $a_q$.

For example, in some embodiments the OOK-modulator 1020 may be configured to map an ON-signal or ON sequence $\boldsymbol{a} = [a_0, a_1, ..., a_{K_B-1}]$ to $\boldsymbol{s}_i$ whenever the corresponding bit is one, according to equation (5):

$$s_i = \begin{cases} \boldsymbol{0}, & c_i = 0 \\ \boldsymbol{a}, & c_i = 1 \end{cases} \quad (5)$$

The ON-signal a can be any complex sequence and can be different for every $\mathbf{s}_i$.

For instance, the ON-signal, can be a random M-PSK symbols, a Zadoff-Chu sequence or can be a known sequence.

The ON-signal $\boldsymbol{a}$ of length $K_B$ may also be a part of a longer sequence $\bar{a}$ having a longer length than the length of $\boldsymbol{a}$, such as for example $KR$ or $KLR$. In this case the longer sequence $\bar{a}$ is defined as $\bar{a} = [\boldsymbol{a_1}, \boldsymbol{a_2}, ..., ]$, where $\boldsymbol{a_i}$ denotes ON-sequences. The ON-sequences $\boldsymbol{a_i}$ may be mapped sequentially onto the samples where $c_i = 1$. As an example, considering $M = 4$ coded bits per OFDM symbol with a $R = 1/2$ Manchester code, $K = 144$ and a total payload of $B = 8$, then $L = 4$ OFDM symbols are required for transmission. Due to the Manchester coding, in this case, there are two ON-sequences per OFDM symbol each of length $K/M = 36$ samples. Hence, a long ON-sequence $\bar{a}$ may be of length $KLR = 144 * 4 * 0.5 = 288$ samples.

Considering multiple ON-sequences $a_q = [a_{q0}, a_{q1}, ..., a_{qK_B}]$ generated by the OOK-modulator 1020, the ON-sequences are used to encode the $B_2 = \log_2 Q$ bits.

Embodiments of the disclosure provide several techniques on how to utilize and encode these $B_2$ bits together with the OOK waveform.

The DFT-precoder 1022 is configured to subsequently DFT-precode the signal $s_m$, which results in the frequency-domain sequence $\boldsymbol{S}_m$.

The DFT-precoder 1022 is configured to take the input sequence $\boldsymbol{s}_m$ of length $K$ and perform the DFT operation to produce a signal $\boldsymbol{S}_m = [S_{m0}, S_{m1}, ..., S_{mK-1}]$, with $S_{mn}$ being defined according to Equation (6):

$$S_{mn} = \frac{1}{\sqrt{K}} \sum_{k=0}^{K-1} s_{mk} \, e^{-j\frac{2\pi kn}{K}} \quad (6)$$

In Equation (6), $s_{mk}$ is element $k$ of $\boldsymbol{s}_m$ and $n = 0,1, ..., K - 1$.

Figure 9 is a block diagram representing the DFT-precoder 1022 according to an exemplary embodiment using $B = 4$ bits per OFDM symbols, for illustration purpose only.

In the example of figure 9, $B = 4$, and the input bits are $\boldsymbol{b} = [b_3, b_2, b_1, b_0] = [1, 1, 0, 1]$, $m = 13$, thus $\boldsymbol{s}_{13} = [\alpha, \alpha, \boldsymbol{0}, \alpha]$.

A OOK symbol has a length $K_B$. Each OOK symbol comprises a number $K_B$ of samples.

In embodiments using OFDM modulation, in the Single or Multi-carrier modulation unit 105, the signal $\boldsymbol{S}_m$ is mapped to the overall transmission bandwidth, i.e. number of sub-carriers $N$, and the resulting signal $\boldsymbol{X}_m = [X_{m0}, X_{m1}, ..., X_{mN-1}]$ is OFDM modulated as:

$$x_m(t) = \sum_{n=0}^{N-1} X_{mn} e^{j2\pi n \Delta f(t - N_{CP}T_c)} \quad (7)$$

In Equation (7), $\Delta f$, $N_{CP}$ and $T_c$ are physical parameters related to the OFDM transmission.

In the mapping to the overall transmission bandwidth, the sub-carrier corresponding to DC subcarrier (DC stands for Direct Current) within the WUS transmission bandwidth can either be used or not used (The DC subcarrier is a subcarrier that has no information sent on it). Using the DC sub-carrier might result in a more complex receiver design to compensate for any DC impairments. If the DC sub-carrier is left unused, the corresponding modulation symbol is set to zero, i.e. $S_m(DC_{index}) = 0$ (for instance $S_{m\left(\left\lfloor \frac{K}{2} \right\rfloor + 1\right)} = 0$ ).

Therefore, the output of the DFT precoder 1022 is punctured but is still the result of a contiguous DFT transform, which does not significantly impact the receiver performance. Assuming that the signal is mapped to indices $n = 0, 1, ..., K - 1$, the resource mapping unit 104 is configured to map signal $\boldsymbol{S}_m$, delivered by the Single or Multi-carrier modulation unit 105, to the DFT-precoded MC-OOK waveform $\boldsymbol{X}_m$ according to the following formula :

$$\boldsymbol{X}_m(n) = \begin{cases} \boldsymbol{S}_m(n), & n = 0, 1, ..., \left\lfloor \frac{K}{2} \right\rfloor - 1 \\ 0, & n = \left\lfloor \frac{K}{2} \right\rfloor \\ \boldsymbol{S}_m(n), & n = \left\lfloor \frac{K}{2} \right\rfloor + 1, \left\lfloor \frac{K}{2} \right\rfloor + 2, ..., K - 1 \end{cases} \quad (8)$$

According to the objectives set in the work Item on LP-WUS approved in RP-234056 for in 3GPP Rel-19, the embodiments of the disclosure provide a OOK based Low Power-WUS design applicable to both IDLE/INACTIVE and CONNECTED modes (RAN1, RAN4), enabling overlaying OOK OFDM sequence(s) over OOK symbol, and ensuring that:

- for IDLE/INACTIVE operation, the same information is delivered irrespective of LP-WUR type, while the OFDM sequence can carry information;

- At least duty-cycled monitoring of LP-WUS is supported for IDLE/INACTIVE modes

Further, the embodiments of the disclosure provide a LP-WUS which indicates paging monitoring triggered by LP-WUS, including at least configuration, sub-grouping and entry/exit condition for LP-WUS monitoring (RAN2, RAN1, RAN3, RAN4).

In particular, they provide WUS information that may be carried by the two following schemes:

- A first scheme where the OOK waveform generated by the transmitter 10 can be received through energy detection (ED) by the LP WU receiver 302 which is configured to perform energy detection. In the first scheme, the LP WU receiver 302 will be also referred to as a 'ED-WUR'.

- A second scheme in which the WUS information is carried by different sequences assigned to the OOK waveform. If the WUR 302 is capable of carrying out correlations in time or frequency-domain, the WUR may decode the information through correlating (COR) with the known sequences. In the second scheme, the LP WU receiver 302 will be also referred to as a COR-WUR.

As the capacity of the WUS may be limited, for example to 8 bits, the network 2 may group user devices 1 (UEs) which are in RRC_IDLE mode such that unnecessary paging is minimized, and thereby reduce the probability to wake up the entire group of UEs if only a single UE is being paged regularly. False wake-up may increase power consumption of the corresponding UEs.

A Wake-up message may be therefore used to wake up a group $G_t$ of UEs 1.

Let $G = \{G_1, G_2, ..., G_T\}$ denote $T$ groups of users, each group consists of at least one user. Each user is configured to a single group.

A user device 1 may be allocated a group $G_t$ identified by a group ID (Identifier) and a user device identifier ID within that group, during the initial WUS configuration setup

It is assumed that the base station 4/network 2 knows the capabilities of the WUR 302 of the user devices 1, that is if the WUR of a user device 1 is an ED-WUR or a COR-WUR or both. Such information may be exchanged when the user device 1 first connects to the network 2.

The groups of user devices 1 may be therefore mixed groups $G_t$, i.e. groups comprising user devices 1 having different WUR capabilities.

In cases where the base station 4/network 2 has to wake-up a given user device 1 and knows that the given user device 1 has a LP-WUR of COR-WUR type (respectively ED-WUR), instead of sending the information through the generated OOK waveform (WUS message) to all the user equipments 1 of the same group as the given user equipment 1, including the user equipments 1 having a LP-WUR 302 of ED-WUR type (respectively COR-WUR type) to wake-up them, the embodiments if the invention enable to only wake-up the user equipments 1 of the same group $G_t$ which have a LP-WUR 302 of COR-UE type, (respectively only the ED-WUR type) .

Under the assumption that the base station 4/network 2 knows the WUR capabilities of the UEs, according to the objectives set in the work Item on LP-WUS has been approved in RP-234056 for in 3GPP Rel-19, it is required that the base station 4 sends the same information with OOK and sequence encoding, for both a WUR of a user device 1 being of ED-WUR type and a WUR 302 of a user device 1 being of COR-WUR type. However, this might not be efficient if the base station 4 knows that the user equipments 1 to be paged have a WUR 302 of ED-WUR type only or WUR 302 of COR-WUR only.

The embodiments of the disclosure provide a transmitter 10 capable of overlaying multiple ON-sequences onto the OOK waveform, so that efficient transmission of OOK waveforms for decoding with energy detection and correlation detection can be achieved according to the previous objectives.

As used herein, 'ON-sequence encoding' refers to the encoding of $B_2 = \log_2 Q$ bits. bits using sequence $2^{B_2}$ of the $Q$ available ON sequences $a_q = [a_{q0}, a_{q1}, ..., a_{qK_B}]$ of length $K_B$ and 'OOK encoding' refers to the encoding of $B_2$ bits into $2^{B_1}$ coded bits, according to equation 3 (when OOK encoding is applied the encoding is performed using the OOK waveform).

In the following description of some embodiments, a payload of 8 bits to independently wake-up $T = 8$ different groups $G_t$ of user equipments 1 will be considered for illustration purpose only and to facilitate the understanding of the invention, although the skilled person will readily understand that the payload and the number of groups of user equipments are not limited to these exemplary numbers.

As mentioned, the WUR 302 of the receiver 30 may be:

- An Energy detector (ED) WUR (ED-WUR) configured to receive the OOK waveform transmitted by the transmitter 10; or

- a Sequence detector (COR-WUR) configured to receive the ON-sequences overlaid onto the OOK waveform generated by the transmitter 10.

When the WUR 302 is an ED-WUR (also referred to as an 'Energy detector'), it does not require coherent detection (no phase information) of the signal from the transmitter 10 and only operates on the amplitude of the received signal.

When the WUR 302 is a COR-WUR (also referred to as a 'sequence detector'), it is configured to carry out correlations, either in time-domain or in frequency-domain, to decode the signal received from the transmitter 10, which requires coherent demodulation (i.e. phase information).

Consequently, an ED-WUR is significantly simpler than a COR-WUR at the expense of inferior performance.

It is assumed that the base-station 4 knows the supported WUR receiver type(s) of a user device 1 via RRC signaling upon connection establishment.

Moreover, it is considered that up to 8 groups can be signaled independently (similarly to the UE grouping techniques used as for PEI or LTE-M/NB-IoT WUS), i.e. higher layers ensure that the grouping minimizes the false paging probability, that is, the likelihood that an entire group of user equipments 1 is woken up if only a single user equipment 1 is paged regularly. For instance, the user equipments that are paged together periodically may be assigned to the same group.

A group $G_t$ of user equipments 1 may comprise user equipments 1 having WUR 302 of either COR-WUR or ED-WUR (mixed group).

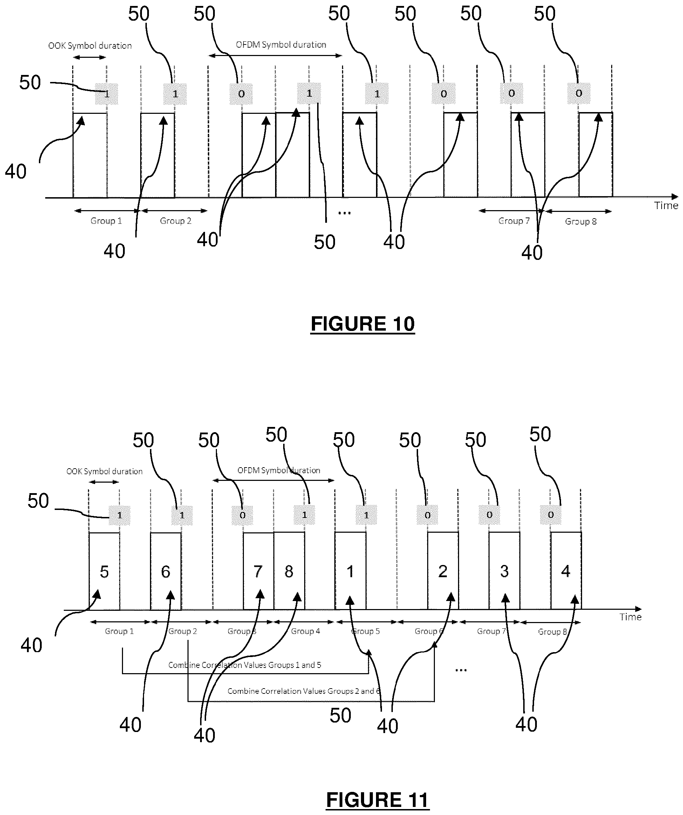

Figure 10 is a diagram representing an example of an OOK-4 WUS generated by the transmitter 10, with $M = 4$, an encoder 101 using Manchester coding, considering 8 groups of user devices. The 8 groups of users are signaled to wake up using the generated OOK-4 waveform with $M = 4$ and Manchester coding, i.e. 2 groups can be signaled in a single OFDM symbol. It can be observed that each group is encoded in OOK-symbols at a specific time. Thus, the user equipments 1, acting as receivers 30, are not required to decode the entire OOK-waveform, but may only decode the portion of the OOK-waveform containing a group information corresponding to their group identifier (Group ID). In embodiments where repetition is required in the generated OOK waveform, a group ID may be advantageously repeated on consecutive OOK symbols so that if user device 1 acting as a receiver 30 comprises a WUR 302 that is a ED-WUR, the user device 1 may go back to sleep faster and save power. The gain in time-diversity by spreading the repetitions over time is not expected to be significant. When repetition is used at the transmitter 10, cyclic shift in time-domain may be used.

If the user device 1 acting as a receiver 30 comprises a WUR 302 that is a COR-WUR, the COR-WUR 302 may decode the received OOK-waveform by correlating with one or more known ON-sequence(s).

In the case of a single ON-sequence generated by the MC-OOK modulator 1020 of the transmitter 10, the COR-WUR 302 may decode the received OOK-waveform by correlating each OOK symbol, in the received OOK-waveform, with the known ON-sequence and compare the absolute correlation value of adjacent OOK symbol, in embodiments where the encoder 101 of the transmitter used Manchester coding to generate the OOK waveform. Further, the COR-WUR 302 may carry out a joint correlation across the entire OOK-waveform to increase performance at the expense of additional complexity. Joint correlation meaning that the short ON-signals are concatenated to a long sequence spanning the entire OOK waveform.

As a result, the OOK waveform of the sequence-based waveform is of the same duration because the same information is transmitted to receivers of both ED-WUR and COR-WUR types. The single ON-sequence case can be considered as the baseline.

In the case of multiple ON-sequences generated by the MC-OOK modulator 1020 of the transmitter 10, denoted $a = [a_1, a_2, ..., a_Q]$ and used to encode $B_2 = \log_2 Q$ bits, the ON-sequences may be used to signal group IDs, i.e. parts of the payload $B$, or use the $B_2$ bits differently.

In embodiments using Manchester Coding at the encoder 101, a known number of ON durations is to be contained in the OOK waveform generated by the transmitter 10.

In such embodiments, a mapping may be performed to pair groups of user devices 1, a group pair comprising a first group G1 and a second group G2, and according such mapping, the OOK waveform may be used to encode the identifier (ID) of the first group of the group pair, whereas the ON sequences may be used to encode the identifier (ID) of the second group of the same pair.

For example, considering the case of $Q = 2$ ON-sequences $a = [a_1, a_2]$ generated per OOK symbol by the MC-OOK generator 1020, the additional bit $B_2 = \log_2 Q = 1$ may be used to encode a group ID or one bit $b_i$ of the payload $B$.

Figure 11 is a diagram representing an exemplary sequence encoding scheme, according to such embodiment, with M = 4, B = 8 and $b$ = [11011000], using two ON sequences. In such example, 8 group IDs corresponding to 8 groups of user devices 1 are encoded, at the encoder 101, using Manchester coding, on an OOK waveform with $M$ = 4 coded bits per OFDM symbol, which can be detected by a WUR 302 of ED-WUR type. The number in the rectangles 50 illustrate the ON-pulse 40 that corresponds to the group ID (or bits $b_i$) encoded with the 2 ON-sequences.

For instance, on the first ON-pulse 40, the group ID '5' corresponding to the first group (group 1) is encoded by choosing one of the 2 sequences, and similarly for the group identifiers 6, 7, 8, 1, 2, 3 and 4 of the remaining 7 groups among the 8 groups (Group 2 to group 8). Therefore, in embodiments in which the transmitter 10 is configured to encode groups of user devices/bits in couples (i.e. one group of user devices 1 of a pair is encoded in the OOK and the other group of the same pair of user devices is encoded with an ON sequence) in response to the receipt of the OOK waveform, a WUR 302 of COR-WUR type can decode the payload $B$ by only receiving the first 2 OFDM symbols instead of all 4 OFDM symbols.

To improve detection performance of a WUR 302 acting as a COR-WUR, the payload b can be repeated at least partially on the last 2 OFDM symbols. To allow for coherent combining at the COR-WUR, the same groups may be encoded in one coded OOK symbol (2 consecutive symbols in this example).

More precisely, in the example of figure 11, the first two OOK symbols are used to encode the ID of group 1 through position of the ON pulse and the associated group 5 through the ON-sequences. When group 5 is signaled with the OOK waveform in the first two pulses in the second OFDM symbol, the ON-sequence encodes group ID 1. Hence, the correlation values of both cases can be combined since they signal the same groups.

In a more formal way, the OOK waveform encodes bits $b = [b_0, b_1, ..., b_{B-1}]$ whereas the ON sequences encode

$$\bar{b} = [b_{\lfloor B/2 \rfloor} b_{\lfloor B/2 \rfloor+1} \ ... \ b_B b_0, b_1, ..., b_{\lfloor B/2 \rfloor-1}]$$

.

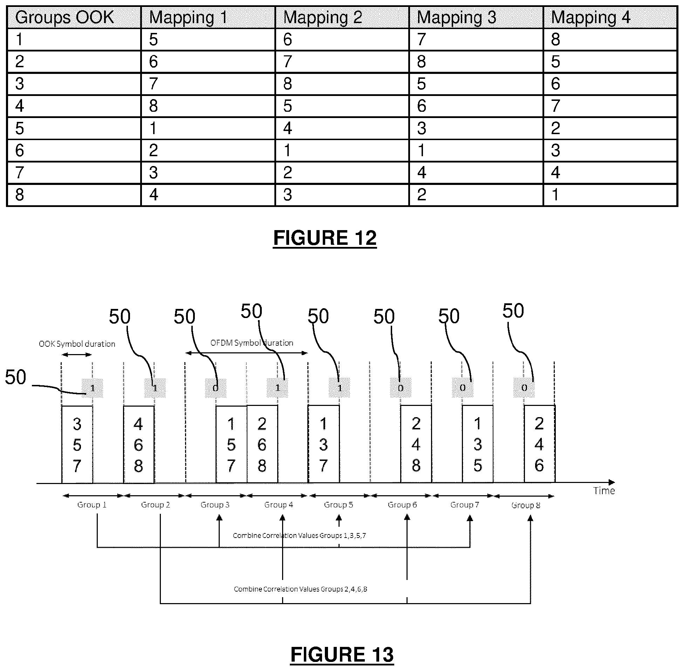

The skilled person will readily understand that the disclosure is not limited to such mapping of groups of user identifier and encompasses other mappings, such as the group mapping given in the table of figure 12 for 2 ON-sequences and 8 groups, which are circular shifts of each other.

In some embodiments, bits/groups of user identifiers may be encoded jointly with the OOK waveform and the ON sequence.

Figure 13 illustrates the example of a sequence encoding scheme with $M$=4, $B$=8, b = [11011000], and $L$=4 OFDM symbols and 8 ON-sequences per OOK symbol.

As illustrated by figure 13, one group may be encoded through the OOK modulation and $B_2 = 3$ groups may be encoded with the ON-sequences, which makes a set of 4 groups that are encoded jointly. In such embodiments**Erreur ! Source du renvoi introuvable.,** the groups may be organized in two sets of groups, such as a first set of groups comprising groups having even group identifiers and a second set of groups comprising groups having odd group IDs. In the example of figure 13, there are accordingly 2 sets of groups, [1,3,5,7] and [2,4,6,8]. In a given set of groups, the group identifiers are encoded jointly, i.e. in a given set of groups, one or more groups may have its identifier encoded via the OOK modulation, while the identifiers of remaining groups in the set are encoded via the ON-sequences.

It is considered that $B_1$ denotes the number of bits/groups that are encoded with the OOK encoding (e.g. using Manchester coding) and $B_2$ denotes the number of bits/groups that are encoded with the ON-sequence encoding, respectively. A set of groups that is encoded jointly consists of $B_S = B_1 + B_2$ groups, i.e. there are $\lceil B/B_S \rceil$ sets of groups such that no group ID is present in more than one group set. The encoding of payload $b$ is such that $b_i$ is encoded via OOK encoding and the remaining bits in the set via sequence encoding.

In some embodiments, the groups of user devices 1 may be arranged (or grouped) in two or more non-overlapping sets, and for each set of group, a joint encoding of bits with OOK modulation and ON-sequence encoding may be applied, that is OOK modulation may be applied to encode the group identifiers of one or more groups in a given set while the ON-sequence encoding may be used to encode the group identifiers of the remaining groups in the same set.

This particularly apply to embodiments using extended Manchester coding, $B'$ bits being then jointly encoded, so that $B_1 = B'$.

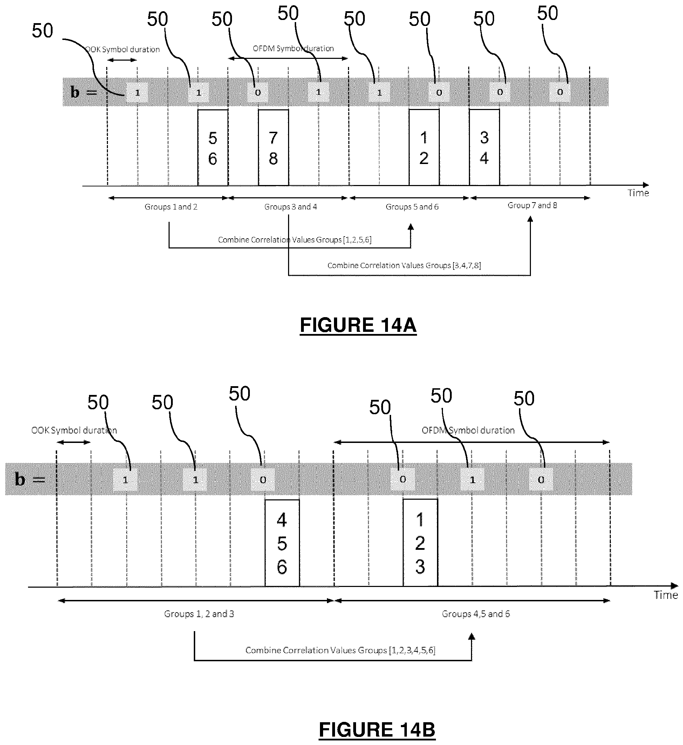

Figure 14A depicts an example of a sequence encoding scheme with $M$=4, $B$=8, b = [11011000], $L$=4 OFDM symbols, and 4 ON-sequences generated using extended Manchester coding $B' = 2$.

In the example of figure 14A, two sets of groups are used corresponding to the set of group identifiers [1,2,5,6] and the set of group identifiers [3,4,7,8].

As $B' = 2$ and $Q = 4$, the size of each group set is $B_S = B_1 + B_2 = 4$.

Compared to the example in figure 13, more bits (group identifiers) are encoded via the OOK encoding and less bits (group identifiers) are encoded via the ON-sequence encoding.

Another example is shown in figure 14B which shows an example of a sequence encoding scheme with $M$=8, $B$=6, b = [110010], $L$=2 OFDM symbols and 8 ON-sequences generated with extended Manchester coding (B'=3)**Erreur ! Source du renvoi introuvable..**

In the example of figure 14B, $B$ = 6 groups are signaled in the WUS (identifiers 4, 5, 6 and 1, 2, 3). In this example, $B_1 = B_2 = 3$ and hence only one group set is used. If the WUR 302 of a receiver user device 30 is a COR-WUR, it can decode the entire payload in a single OFDM symbol, whereas if the WUR 302 of a receiver user device 30 is ED-WUR, it requires 2 OFDM symbols. This example represents a high data-rate WUS transmission.

In such embodiments with joint encoding, $B_1$ denotes the number of bits that are encoded jointly with OOK encoding and $B_2$ denotes the number of bits that are encoded with different ON-sequences, the number of ON-sequences being $Q = 2^{B_2}$. The payload $b = [b_0 b_1 ... b_{B-1}]$ denotes the payload that is to be encoded and comprises bits $b_i$, $i = 0, 1, ..., B-1$.

The joint encoding method comprises first forming $\lceil B/B_S \rceil$ sets $S_j$ $(j = 1, 2, ...., \lceil B/B_S \rceil)$ of bits of size $B_S = B_1 + B_2$ where each bit is only present in a single set.

The joint encoding method then comprises encoding bits $b_i$ via OOK encoding and using ON-sequence indexed by the remaining $B_2 = B_S - B_1$ bits

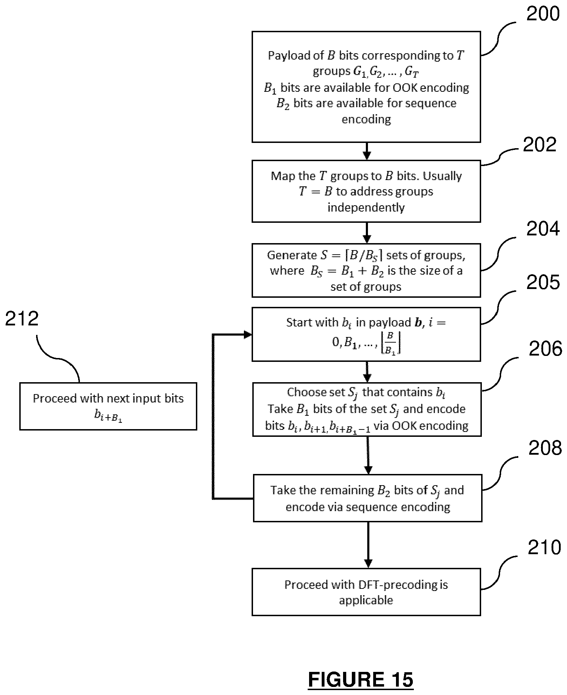

Figure 15 is a flowchart depicting the joint encoding method according to some embodiments.

In step 200, the payload of $B$ bits corresponding to T groups $G_1$, $G_2$, ..., $G_T$ is received. $B_1$ bits are available for OOK encoding and $B_2$ bits are available for sequence encoding.

In step 202, the $T$ groups are mapped to $B$ bits. In one embodiment $T$ may be equal to $B$ to address groups independently.

In step 204, $S$ sets of groups are generated such that $S = \lceil B/B_S \rceil$ where $B_S = B_1 + B_2$ is the size of a set of groups.

In step 205 to 208, each component $b_i$ of the payload $B$ received bits is then processed, for $i = 0, B_1, ..., \lfloor \frac{B}{B_1} \rfloor$ for example according to an iterative processing as illustrated in figure 15.

More specifically, in step 206, the set $S_j$ that contains $b_i$ is selected and then the $B_1$ bits of the set $S_j$ are taken and the bits $b_i$, $b_{i+1}$, $b_{i+B_1-1}$ are encoded using OOK encoding.

In step 208, the remaining $B_2$ bits of the set $S_j$ are encoded using ON-sequence encoding.

Steps 205 to 208 are repeated for the next input bit $b_{i+B_1}$ of the payload $B$.

Steps 205 to 208 are repeated until all input bits $b_i$ have been processed.

Then in step 210, the DFT-precoding is applied.

In some aspects, the OOK encoded waveform may be repeated multiple times so that the WUR 302 can detect it with the required reliability.

In the preceding description of some embodiments of the disclosure, although it has been considered that the same payload is encoded via the OOK modulation *and* the ON sequence encoding, alternatively a different payload may be encoded, via OOK modulation and ON sequence encoding.

Further, in some embodiments, the $B_2$ bits available through ON sequence encoding may be used differently.

In some aspects, the OOK modulation and the ON-sequence encoding may be used to encode two different and independent payloads.

In some embodiments, such different payloads may be used to address a WUR 302 of ED-WUR type and for a WUR of COR-WUR type, independently per group.

In such embodiments, the $B_2$ bits may be used to encode an entirely different payload than the payload with OOK encoding. Such different payload may be decodable only by a WUR 302 of COR-WUR type so that it is possible to wake up a WUR 302 of ED-WUR type and a WUR 302 of COR-WUR type *independently,* which enables reducing unnecessary wake ups.

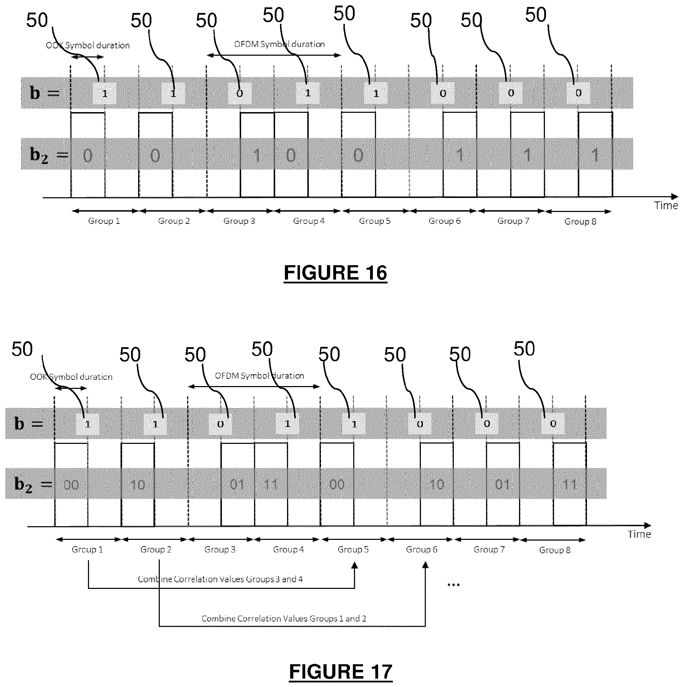

An example is shown in figure 16 which depicts an example of independent OOK modulation and sequence encoding with $M$=4, $B$=8, b = [11011000], $b_2$ = [00100111] and the use of 2 ON-sequences, where b is the payload encoded via the OOK encoding and $b_2$ is the payload encoded via the sequence encoding. In this case, b and $b_2$ are independent and can be used to wake up a COR-WUR and an ED-WUR separately within a group of user devices 1. Compared to the joint encoding embodiment illustrated by figure 12, correlation values cannot be combined and hence the performance of the COR-WUR degrades. In the same setting, if 4 sequences are available, i.e. 2 bits can be encoded with sequences, the payload may be repeated as shown in figure 17. Figure 17 represents an example of an independent OOK encoding and sequence encoding with $M$=4, $B$=8, b=[11011000], b_2=[00100111] and 4 ON-sequences. In this example, the correlation values of identical groups can be combined to improve performance.

In some embodiments, the transmission sent by the transmitter 10 may be terminated early, after the sequence-based WUS has been sent even if OOK-based WUS is sent incompletely.

Indeed, the transmission sent by the transmitter 10 comprises an ON-sequence based WUS transmission and an OOK based WUS transmission (or OOK waveform based WUS transmission. The wake-up signal WUS only concerns a WUR 302 of COR-WUR type. A WUS transmission may be terminated once the entire payload encoded sequence has been sent even if the OOK transmission is incomplete. For instance, in the example of figure 13, a COR-WUR can decode the entire payload already after one OFDM symbol, but the OOK transmission for an ED-WUR lasts 4 OFDM symbols. If only receiver user devices 30 comprising WUR 302 of COR-WUR type are concerned, the transmission can be terminated after one OFDM symbol. Hence, a WUR 302 of ED-WUR type will decode groups 1 and 2 but not the remaining groups 3-8. If not decodable, ED-WUR in groups 3-8 will not wake up, thereby reducing unnecessary wake-up. If an ED-WUR decodes all groups, it will notice that groups 1-2 can be decoded but not the remaining groups and conclude that the OOK transmission has been terminated early.

In this case, the entire WUS bandwidth BW (as in OOK-1) may be used to transmit the sequence even if the WUS OOK configuration is OOK-4 where only part of the WUS BW is ON. A receiver user device 30 comprising a WUR 302 of COR-WUR type may need to correlate in the current OOK-4 configuration as well as in the OOK-1 configuration which increases complexity.

If the usual configuration is OOK-4 (i.e. DFT-precoded OOK) with 4 OOK symbols per OFDM but only the WUR 302s of COR WUR type are to wake up, then the configuration can be changed to OOK-1, meaning a single longer OOK symbol per OFDM symbol. This longer OOK sequence can accommodate more ON-sequences and hence transmit more bits with sequence encoding. A WUR 302 of ED-WUR type will be completely unware of this and will decode nothing. However, a WUR 302 of COR-WUR type will have to try decoding with the two settings, OOK-4 and OOK-1

In some embodiments receiver user devices 30 comprising WURs 302 of COR-WURs type may be configured to use OOK-1 configuration to receive sequence-based WUS in addition to a possible OOK-4 configuration.

OOK-1 has a longer ON-signal than OOK-4, so that longer sequences can be supported, which allows for more payload with similar cross-correlation properties of the sequences.

In some embodiments, a dedicated bit may be used in the waveform generated and sent by the transmitter 10 to indicate the WUR type (the dedicated bit is also called WUR-type-bit).

In one embodiment, the first bit of the transmission may indicate the WUR type. That is, WURs 302 of ED-WUR type can turn off the corresponding receiver 30 after decoding the dedicated bit (e.g. first bit), if the dedicated bit is 0 or continue receiving the remaining signal if the dedicated bit is 1, for instance. The dedicated WUR-type-bit may be encoded independently in the OOK encoding and in the ON-sequence encoding, i.e. at least 2 sequences may be used.

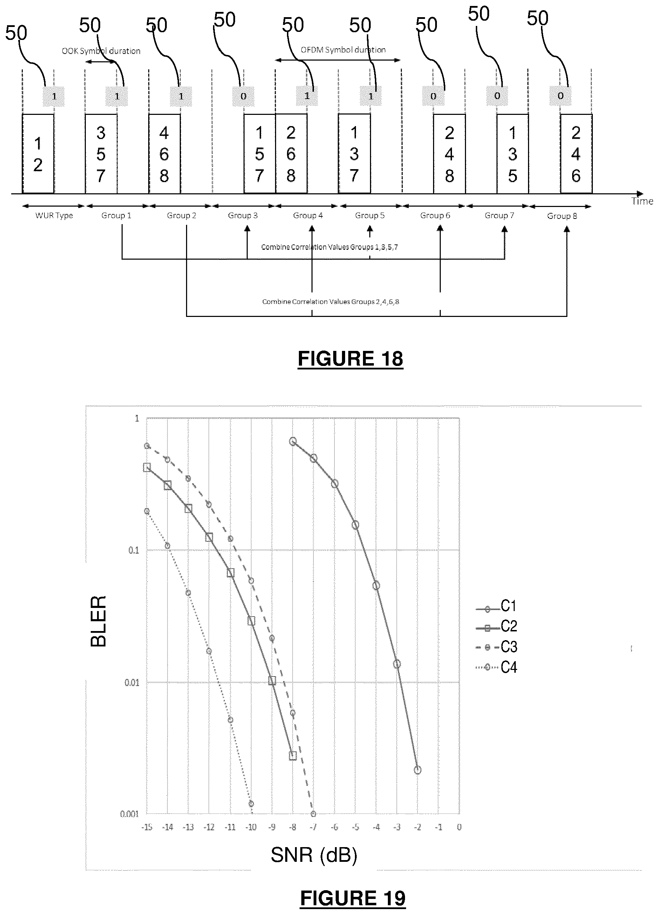

An example is shown in figure 18 which represents an example of a proposed sequence encoding scheme using a WUR-type bit signaling with $M$=4, $B$=8, b = [11011000], $L$=4 OFDM symbols and 8 sequences. In figure 18, **Erreur ! Source du renvoi introuvable.**the first ON-sequence and its position signals the WUR type. 2 ON-sequences are used to encode the WUR-type-bit, those sequences being any two of the total $Q$ of available ON-sequences (sequence 1 and 2 in the example). In some embodiments, the two sequences may be 2 dedicated sequences that have good cross-correlation properties in order to minimize false decoding of this important bit. For instance, if Zadoff-Chu sequences are used to generate the ON-sequences, the two ON-sequences having the maximal cyclic shift may be used.

Figure 19 shows the performance of the exemplary transmission schemes illustrated in figures 11 and 12.

In figure 19:

- The curve C1 corresponds to ED-WUR with a single ON-sequence;
- The curve C2 corresponds to COR-WUR with a single ON-sequence;
- The curve C3 corresponds to COR-WUR with two ON-sequence and non-combining; and
- The curve C4 corresponds to COR-WUR with two ON-sequence and combining.

It can be observed that if only a single sequence is used, there is 6dB performance gain of the COR-WUR compared to the ED-WUR. In case of 2 sequences there is a 3dB gain if combining is used and the total gain compared to ED-WUR increases to 8.5 dB.

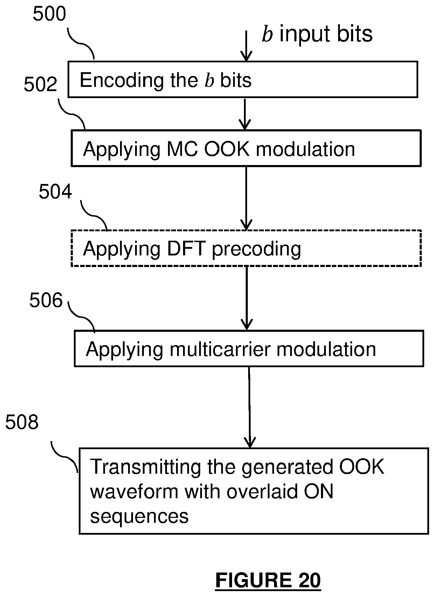

Figure 20 is a flowchart depicting a method for generating and transmitting an encoded waveform at the transmitter, according to embodiments of the invention.

In step 500, the input bits $b = [b_0, b_1, ..., b_{B-1}]$ are received and the input bits b are encoded into encoded bits $c$.

In step 502, MC-OOK modulation is applied to the encoded bit $c$, which provides a MC-OOK modulated signal $s_m$ for the message $m$, the signal $s_m$ comprising $B$ elements $s_i$. The MC-OOK modulation step 502 comprises mapping an ON-signal $a$ comprising $K_B$ elements such as $a = [a_0, a_1, ..., a_{K_{B-1}}]$ to each element $s_i$ of the MC-OOK modulated signal $s_m$ whenever the corresponding input bit $b_i$ is equal to one, and a value zero otherwise, the ON-signal a being a complex sequence.

In step 504, Discrete Fourier Transform (DFT) precoding may be applied to the signal $s_m$, which provides a resulting signal $S_m$.

In step 506, single or multicarrier modulation is applied to the resulting signal $X_m$.

In step 508, a message derived from the signal $x_m(t)$ determined by the single or multicarrier modulation unit 105 is transmitted to the receiver 30 using one or more transmit antennas. The transmission comprises a WUS transmission (ON sequence transmission) and an OOK transmission.

In some embodiments, step 502 may comprise overlaying multiple ON-sequences onto the OOK waveform, as described in the previous embodiments, enabling efficient transmission of OOK waveforms for decoding with energy detection and correlation detection.

In response to the OOK waveform from the transmitter 10, a receiver 30 comprising a WUR 302 of COR-type receives the waveform and correlates it with all possible sequences with all OOK symbols.

The communication system 100 according to the embodiments of the invention may be used in various applications such as Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 100 may be a wireless network, for example a wireless IoT/M2M network representing low energy power-consumption/long battery life/low-latency/low hardware and operating cost/high connection density constraints such as low-power wide area networks and low-power short-range IoT networks. Exemplary technologies used in such applications may comprise 5G, LTE-NB1 (Long Term Evolution-Machine to Machine, Narrow Band) and NB-IoT (NarrowBand IoT).

The communication system 100 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

A user device 1 may be any physical internet-enabled device/object provided with required hardware and/or software technologies enabling communication over Internet. A user device 1 may be any standard internet connected-devices such as desktop computers, servers, virtual machines laptops, smart-phones, tablets. In some applications, the user device 1 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present invention can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail.

In particular, although the invention has particular advantages in embodiments using OFDM modulation, the invention also applies to equivalent single-carrier and multi-carrier modulation.

Additional advantages and modifications will readily appear to those skilled in the art. The invention in its broader aspects is therefore not limited to the specific details, representative methods, and illustrative examples shown and described.

## Claims

1. A transmitter (10) configured to transmit a Wake-Up Signal (WUS) message $m = 0, 1, ..., 2^B - 1$ from an input bit vector $b$ comprising $B$ input bits $b_i$ through a communication channel using single or multi-carrier modulation, to one or more receiver devices (30), the transmitter (10) comprising a set of transmit antennas, wherein the transmitter comprises :

   - a Multi-Carrier On-Off Keying (MC-OOK) modulator (1020) configured to apply a MC-OOK modulation to the input bit vector $b = [b_0, b_1, ..., b_{B-1}]$, which provides a MC-OOK modulated signal $s_m$ for the message $m$, the signal $s_m$ comprising $B$ elements $s_i$;
   - a Discrete Fourier Transform (DFT) precoder (1022) configured to apply DFT-precoding to the signal $s_m$, which provides a resulting signal $S_m$;
   - a single or multicarrier modulation unit (105) configured to apply single or multicarrier modulation to the resulting signal $S_m$ output by the DFT-precoder (1022);
   wherein the MC-OOK modulator (1020) is configured to map one of Q available ON-sequences $a_q$ each comprising $K_B$ elements such as $a_q = [a_{q0}, a_{q1}, ..., a_{qK_B}]$ to each element $s_i$ of the MC-OOK modulated signal $s_m$ whenever the corresponding input bit $b_i$ is equal to one, and a zero value otherwise,
   the transmitter (10) being configured to transmit a wake-up message derived from the signal x(t) determined by the single or multicarrier modulation unit (105) using one or more transmit antennas, the wake-up message transmission comprising an ON-sequence-based WUS transmission and an OOK waveform-based WUS transmission,
   wherein the transmitter (10) is configured to overlay multiple ON-sequences onto the OOK waveform.

2. The transmitter of claim 1, wherein said one or more receiver devices are grouped in groups of receiver devices, each group of receiver devices being associated with a group identifier, said wake-up message being sent to one or more groups of user devices, wherein said $B$ input bits correspond to a number of groups of receiver devices,, wherein the OOK waveform is used to encode the identifier (ID) of the at least some groups of user devices and/or one or more ON-sequences is used to encode the identifier (ID) of the remaining groups among said one or more groups.

3. The transmitter of claim 2, wherein said groups are paired by group pairs, according to a group pair mapping, a group pair comprising a first group and a second group, wherein the OOK waveform is used to encode the identifier (ID) of the first group of a group pair, whereas the ON-sequences are used to encode the identifier (ID) of the second group of the same group pair.

4. The transmitter of claim 3, wherein the OOK waveform is used to encode bits $b = [b_0, b_1, ..., b_{B-1}]$ whereas the ON sequences are used to encode $\overline{b} = [b_{\lfloor B/2 \rfloor} b_{\lfloor B/2 \rfloor+1} \ldots b_B b_0, b_1, \ldots, b_{\lfloor B/2 \rfloor-1}]$ .

5. The transmitter of any preceding claim 3 and 4, wherein said pair mapping is a circular shift mapping.

6. The Transmitter of claim 2, wherein the groups are organized in non-overlapping sets of groups, comprising at least two sets of groups, and wherein in a given set of groups, the group identifiers are encoded jointly.

7. The transmitter of claim 6, wherein in a given set of group, one or more groups have their group identifiers encoded using the OOK modulation, while the identifiers of the remaining groups of the set are encoded using the ON-sequences.

8. The transmitter of claim 7, wherein said sets comprise two sets, including a first set of groups comprising groups having even group identifiers and a second set of groups comprising groups having odd group identifiers.

9. The transmitter of any preceding claim 2 to 8, wherein said OOK waveform and said one or more ON-sequences are used to encode different and independent payloads.

10. The transmitter of claim 9, wherein the transmission sent by the transmitter (10) is terminated early, after the ON-sequence-based WUS has been sent even if OOK-based WUS is sent incompletely.

11. The transmitter according to any preceding claim, wherein the waveform sent by the transmitter (10) comprise a dedicated bit indicating a wake-up receiver type among an energy detection wake-up receiver and a correlation wake-up receiver.

12. The transmitter (1) according to any preceding claim, wherein the encoder (101) uses at least one generator code to code the input bits, the generator code being a Manchester Code or an extended Manchester Code.

13. A method for transmitting a Wake-Up Signal (WUS) message $m = 0, 1, \ldots, 2^B - 1$ from an input bit vector $b$ comprising $B$ input bits $b_i$ through a communication channel using single or multi-carrier modulation, to one or more receiver devices (30), wherein the method comprises :

   - applying a MC-OOK modulation to the input bit vector $b = [b_0, b_1, \ldots, b_{B-1}]$, which provides a MC-OOK modulated signal $s_m$ for the message m, the signal $s_m$ comprising $B$ elements $s_i$;
   - applying DFT-precoding to the signal $s_m$, which provides a resulting signal $S_m$;
   - applying single or multicarrier modulation to the resulting signal $S_m$ output by the DFT-precoder (1022), wherein the MC-OOK modulation step comprises mapping one of Q available ON-sequences $a_q$ each comprising $K_B$ elements such as $a_q = [a_{q0}, a_{q1}, \ldots, a_{qK_B}]$ to each element $s_i$ of the MC-OOK modulated signal $s_m$ whenever the corresponding input bit $b_i$ is equal to one, and a zero value otherwise,
   the transmission method (10) comprising transmitting a wake-up message derived from the signal $x(t)$ determined in the single or multicarrier modulation step, using one or more transmit antennas, the wake-up message transmission comprising an ON-sequence-based WUS transmission and an OOK waveform-based WUS transmission,
   wherein the method is configured to overlay multiple ON-sequences onto the OOK waveform.

**100**

2

4

BS

1T

1R

UE

UE

3

**FIGURE 1**

**100**

10

3

30

| Transmitter | Communication channel | Receiver |

**FIGURE 2**

**FIGURE 3**

| CP | OFDM symbol | CP | OFDM symbol | ... | CP | OFDM symbol |

$T_{CP}$     $T_{OFDM}$

**FIGURE 4**

<u>10</u>

101     102     104     105

$b$ → Encoder → $c$ → Waveform modulation unit → $S_m$ → Resource Mapping unit → $X_m$ → Single or multi-carrier Modulation Unit → $x_m(t)$

**FIGURE 5**

| Input Bits | Coded Bits |
|------------|------------|
| 00 | 0001 |
| 01 | 0010 |
| 10 | 0100 |
| 11 | 1000 |

**FIGURE 6**

| Input Bits | Coded Bits |
|------------|------------|
| 000 | 00000001 |
| 001 | 00000010 |
| 010 | 00000100 |
| 011 | 00001000 |
| 100 | 00010000 |
| 101 | 00100000 |
| 110 | 01000000 |
| 111 | 10000000 |

**FIGURE 7**

<u>102</u>   1020   1022

$c$ → [ OOK Modulator ] $S_m$ → [ DFT-precoder ] $S_m$ →

**FIGURE 8**

<u>10</u>

▨ Other Transmission
■ WUS
☐ Potential Guard Band

$K$

$K_B$

$B$ bits → [ Signal generation ] → $b_0 = 1$  $b_1 = 0$  $b_2 = 1$  $b_3 = 1$

1020

101

→ [ DFT-precoder ] 

WUS BW

Mapping

104

1022

[ Single or multi-carrier Modulation Unit ]

105

$b_0 = 1$   $b_2 = 1$  $b_3 = 1$
$b_1 = 0$

N/0 samples

111

**FIGURE 9**

**FIGURE 10**

**FIGURE 11**

| Groups OOK | Mapping 1 | Mapping 2 | Mapping 3 | Mapping 4 |
|---|---|---|---|---|
| 1 | 5 | 6 | 7 | 8 |
| 2 | 6 | 7 | 8 | 5 |
| 3 | 7 | 8 | 5 | 6 |
| 4 | 8 | 5 | 6 | 7 |
| 5 | 1 | 4 | 3 | 2 |
| 6 | 2 | 1 | 1 | 3 |
| 7 | 3 | 2 | 4 | 4 |
| 8 | 4 | 3 | 2 | 1 |

## FIGURE 12

## FIGURE 13

EP 4 604 469 A1

**FIGURE 14A**

**FIGURE 14B**

25

200

Payload of $B$ bits corresponding to $T$ groups $G_1, G_2, \ldots, G_T$
$B_1$ bits are available for OOK encoding
$B_2$ bits are available for sequence encoding

202

Map the $T$ groups to $B$ bits. Usually $T = B$ to address groups independently

204

Generate $S = \lceil B/B_S \rceil$ sets of groups, where $B_S = B_1 + B_2$ is the size of a set of groups

205

212

Start with $b_i$ in payload $\boldsymbol{b}$, $i = 0, B_1, \ldots, \left\lfloor \frac{B}{B_1} \right\rfloor$

206

Proceed with next input bits $b_{i+B_1}$

Choose set $S_j$ that contains $b_i$
Take $B_1$ bits of the set $S_j$ and encode bits $b_i, b_{i+1}, b_{i+B_1-1}$ via OOK encoding

208

Take the remaining $B_2$ bits of $S_j$ and encode via sequence encoding

210

Proceed with DFT-precoding is applicable

**FIGURE 15**

**FIGURE 16**

**FIGURE 17**

**FIGURE 18**

**FIGURE 19**

500

*b* input bits

502 | Encoding the *b* bits

Applying MC OOK modulation

504

Applying DFT precoding

506

Applying multicarrier modulation

508

Transmitting the generated OOK waveform with overlaid ON sequences

**FIGURE 20**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEBASTIAN WAGNER ET AL: "Discussion on L1 signal design and procedure for low power WUS", 3GPP DRAFT; R1-2301133; TYPE DISCUSSION; FS_NR_LPWUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Athens, GR; 20230227 - 20230303 17 February 2023 (2023-02-17), XP052248272, Retrieved from the Internet: URL:https://www.3gpp.org/ftp/TSG_RAN/WG1_R L1/TSGR1_112/Docs/R1-2301133.zip R1-2301133_AI_9_13_3-L1 signal design and procedure for low power WUS.docx [retrieved on 2023-02-17] | 1-3,5-9, 12,13 | INV. H04L27/02 H04L27/26 |
| A | * paragraph [02.3] * <br> * paragraph [02.6] * <br> * paragraph [0003] * <br> * paragraph [0006] * | 4,10,11 | TECHNICAL FIELDS SEARCHED (IPC) <br> H04L |

-----

-/--

The present search report has been drawn up for all claims

| Place of search | Date of completion of the search | Examiner |
|---|---|---|
| Berlin | 10 July 2024 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | **Application Number**<br>EP 24 30 5274 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | PATRICK MERIAS ET AL: "Summary #2 of discussions on L1 signal design and procedure for low power WUS",<br>3GPP DRAFT; R1-2212866; TYPE DISCUSSION; FS_NR_LPWUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. 3GPP RAN 1, no. Toulouse, FR; 20221114 - 20221118<br>17 November 2022 (2022-11-17), XP052223408,<br>Retrieved from the Internet:<br>URL:https://www.3gpp.org/ftp/TSG_RAN/WG1_RL1/TSGR1_111/Docs/R1-2212866.zip R1-2212866 Summary #2_LP WUR_signals_procedures_GTW.docx [retrieved on 2022-11-17] | 1-3,5-9,<br>12,13 | |
| A | * page 2 - page 4 *<br>* page 16 *<br>- - - - - | 4,10,11 | **TECHNICAL FIELDS<br>SEARCHED (IPC)** |

The present search report has been drawn up for all claims

| Place of search | Date of completion of the search | Examiner |
|---|---|---|
| Berlin | 10 July 2024 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New SID: Study on low-power Wake-up Signal and Receiver in NR. *RP-213645*, 2021